# EUROPEAN PATENT SPECIFICATION

(11) **EP 3 474 078 B1**
(45) Date of publication and mention of the grant of the patent: **03.06.2020**
(21) Application number: 17815375.5
(22) Date of filing: 19.06.2017
(51) Int. Cl.: G03G 15/02, B32B 1/00, B32B 7/02, G03G 15/00, G03G 15/08, G03G 15/16, G03G 15/20, G03G 21/00

(54) **CONDUCTIVE ROLLER**
LEITFÄHIGE WALZE
ROULEAU CONDUCTEUR

(30) Priority: 20.06.2016 JP 2016121991
(43) Date of publication of application: 24.04.2019
(73) Proprietor: Bridgestone Corporation, Tokyo 104-8340 (JP)
(72) Inventor: ADACHI Mitsuaki, Tokyo 104-8340 (JP); ISHIMI Saori, Tokyo 104-8340 (JP)
(74) Representative: Oxley, Robin John George
(86) International application number: PCT/JP2017/022599
(87) International publication number: WO 2017/221907

(56) References cited:
- JP-A- H11 249 384
- JP-A- 2002 040 801
- JP-A- 2004 240 358
- JP-A- 2007 286 252
- JP-A- 2012 189 706
- US-A1- 2006 204 280
- US-A1- 2012 288 301

## Description

### TECHNICAL FIELD

The present invention relates to a conductive roller (hereinafter, also simply referred to as "roller"), more particularly a conductive roller used for an image forming process performed by an image forming apparatus, such as a copying machine or a printer.

### BACKGROUND ART

In image forming apparatuses utilizing an electrophotographic system such as copying machines, fax machines and printers, a variety of conductive rollers (e.g., charging rollers, transfer rollers, toner supply rollers, developing rollers, cleaning rollers, paper-feeding rollers, and pressure rollers for fixation) are used. These conductive rollers generally have a basic structure in which a base layer composed of a rubber material or a resin material is supported on the outer circumference of a shaft (core metal).

Depending on the intended use of the conductive rollers, one or more layers are further arranged on the base layer so as to satisfy the required performance. For instance, Patent Document 1 discloses a technology in which, in a charging roller including first and second conductive elastic layers that are laminated on a conductive substrate, not only the constitutions of the first and the second conductive elastic layers are defined but also the impact resilience of the second conductive elastic layer is defined to be greater than that of the first conductive elastic layer for the purpose of inhibiting the generation of spot images and stripe images.

US 2006/204280 A1 discloses a conductive roller in which plural resin layers are arranged on the outer circumference of a shaft, wherein the resin layers comprise at least a base layer and a surface layer from the inner circumferential side, the plural resin layers all have a loss tangent (tan δ) of 0.2 or less at a temperature of 40 °C.

### RELATED ART DOCUMENT

### PATENT DOCUMENT

[Patent Document 1] JP2012-141386A (Claims, etc.)

### SUMMARY OF THE INVENTION

### PROBLEMS TO BE SOLVED BY THE INVENTION

Incidentally, when a conductive roller is retained in a state of being pressed against other member in an image forming apparatus, there are cases where a pressure mark is left on the pressed spot and the part of the pressure mark does not sufficiently function as a roller, causing an image defect in printing. Such a permanent deformation that remains as a pressure mark after the removal of a load is referred to as "C-set" for short of compression set.

In this respect, as disclosed in Patent Document 1, a technology of making the formation of a pressure mark unlikely to occur by increasing the elastic modulus of a layer positioned on the surface of a roller, that is, by making the surface layer hard, is conventionally known; however, such improvement on pressure mark is not adequate. Particularly, in recent years, since such a contact part is more likely to appear as an image defect due to an increase in the printing speed, it has been desired to solve this problem.

In view of the above, an object of the present invention is to provide a conductive roller in which the occurrence of an image defect caused by a pressure mark is suppressed.

### MEANS FOR SOLVING THE PROBLEMS

The present inventors intensively studied to discover that the above-described problem can be solved by defining layers constituting a roller so as each to have a prescribed loss tangent (tan δ) value and a prescribed relationship of elastic moduli between the layers, thereby completing the present invention.

That is, the present invention is a conductive roller in which plural resin layers are arranged on the outer circumference of a shaft, the conductive roller being characterized in that the resin layers include at least a base layer and a surface layer from the inner circumferential side, the plural resin layers all have a loss tangent (tan δ) of 0.2 or less at a temperature of 40°C, and, among the plural resin layers, at least a pair of two adjacent layers satisfy a relationship of G'o ≤ G'i between the elastic modulus G'o of a layer positioned on the outer circumferential side and the elastic modulus G'i of a layer positioned on the inner circumferential side.

In the roller of the present invention, it is preferred that all pairs of adjacent two layers of the plural resin layers satisfy a relationship of G'o ≤ G'i between the elastic modulus G'o of a layer positioned on the outer circumferential side and the elastic modulus G'i of a layer positioned on the inner circumferential side. The resin layers may include at least the base layer, an intermediate layer and the surface layer from the inner circumferential side.

Further, in the roller of the present invention, it is more preferred that all pairs of adjacent two layers of the plural resin layers satisfy a relationship of G'o < G'i between the elastic modulus G'o of a layer positioned on the outer circumferential side and the elastic modulus G'i of a layer positioned on the inner circumferential side.

Still further, in the roller of the present invention, it is preferred that the surface layer contains, as a main component, a polyurethane resin that contains a polyol component having a number average molecular weight (Mn) of 1,000 to 5,000 in terms of polystyrene. Yet still further, in the roller of the present invention, the surface layer preferably has an elastic modulus of 1 to 30 MPa; the intermediate layer preferably has an elastic modulus of 1 to 50 MPa; and the base layer preferably has an elastic modulus of 1 to 100 MPa.

### EFFECTS OF THE INVENTION

According to the present invention, a conductive roller in which the occurrence of an image defect caused by a pressure mark is suppressed can be realized.

### BRIEF DESCRIPTION OF THE DRAWINGS

[FIG. 1] FIG. 1 is an enlarged cross-sectional view illustrating one example of the conductive roller of the present invention, which view was taken along the direction perpendicular to an axial direction.
[FIG. 2] FIG. 2 is an enlarged cross-sectional view illustrating another example of the conductive roller of the present invention, which view was taken along the direction perpendicular to an axial direction.
[FIG. 3] FIG. 3 is a partial cross-sectional view illustrating one example of the image forming apparatus of the present invention.
[FIG. 4] FIG. 4 is an explanatory drawing that relates to an evaluation method used in Examples.

### MODE FOR CARRYING OUT THE INVENTION

Embodiments of the present invention will now be described in detail referring to the drawings.

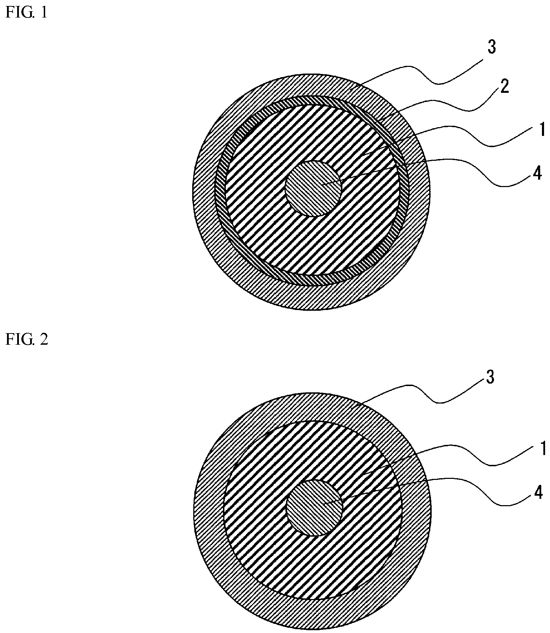

FIGS. 1 and 2 are each an enlarged cross-sectional view illustrating one example of the conductive roller of the present invention, which view was taken along the direction perpendicular to an axial direction. As illustrated, in the conductive roller of the present invention, plural layers, for example, two to four layers (three resin layers in FIG. 1 and two resin layers in FIG. 2) are arranged on the outer circumference of a shaft 4. The roller of the present invention is required to have at least a base layer 1 and a surface layer 3 as resin layers from the inner circumferential side, and it is preferred that, as illustrated in FIG. 1, the roller of the present invention have at least the base layer 1, an intermediate layer 2 and the surface layer 3 from the inner circumferential side.

In the present invention, it is important that the plural resin layers all have a loss tangent (tan δ) of 0.2 or less at a temperature of 40°C and that, among the plural resin layers, at least a pair of two adjacent layers satisfy a relationship of G'o ≤ G'i between the elastic modulus G'o of a layer positioned on the outer circumferential side and the elastic modulus G'i of a layer positioned on the inner circumferential side. By controlling the loss tangent (tan δ) to be 0.2 or less for all of the resin layers, the resilience of the respective resin layers is improved; therefore, even when a depression is once made thereon, it is easily restored to an original state, and this can make it less likely that such a pressure mark that causes an image defect is left as a permanent deformation on the resin layers. Further, when the surface layer is hard as in the prior art, it is believed that the hard surface layer inhibits the recovery of a base layer and an intermediate layer existing on the inner side from a compressed state; however, in the present invention, by allowing at least one pair of two adjacent layers of the plural resin layers to satisfy the relationship of G'o ≤ G'i, the elasticity can be well-balanced between the surface layer and the layer(s) existing on the inner side thereof, and the recovery of the inner layer(s) from a depressed state is thus not inhibited, as a result of which the generation of a pressure mark can be inhibited. Particularly, according to the present invention, even when the roller is left to stand for a long period under a high-temperature and high-humidity environment of 40°C and 95% RH in a state where the roller is in press-contact with other member, the generation of a C-set on the roller can be inhibited, so that the occurrence of an image defect can be suppressed.

In the present invention, the resin layers are required to have a loss tangent (tan δ) of 0.2 or less, preferably 0.15 or less, at a temperature of 40°C. It is noted here that the loss tangent (tan δ) is defined as follows: Loss tangent (tan δ) = Loss elastic modulus G"/Storage elastic modulus G'.

The elastic moduli G'o and G'i of resin layers are tensile storage elastic moduli. In the present invention, the loss tangent (tan δ) and the elastic moduli G'o and G'i can be measured by a viscoelasticity test based on the tensile vibration non-resonance method prescribed in JIS K7244-4. When the elastic moduli of resin layers have a relationship of G'o = G'i, the relationship is meant to encompass an error range of the elastic moduli and, specifically, the elastic moduli are regarded as the same within an error range of ±10%.

In the present invention, it is preferred that all pairs of adjacent two layers of the plural resin layers satisfy a relationship of G'o ≤ G'i between the elastic modulus G'o of a layer positioned on the outer circumferential side and the elastic modulus G'i of a layer positioned on the inner circumferential side. Since this allows the surface layer to have the smallest elastic modulus, that is, to be the softest, the recovery of the inner layers from a depressed state is less inhibited, as a result of which the effect of suppressing the generation of a pressure mark can be further improved.

It is noted here that, in the present invention, the phrase "all pairs of adjacent two layers of the plural resin layers satisfy a relationship of G'o ≤ G'i between the elastic modulus G'o of a layer positioned on the outer circumferential side and the elastic modulus G'i of a layer positioned on the inner circumferential side" means as follows. That is, for example, as illustrated in FIG. 1, in cases where the resin layers consist of three layers which are the base layer 1, the intermediate layer 2 and the surface layer 3, the elastic modulus G'1 of the base layer 1, the elastic modulus G'2 of the intermediate layer 2 and the elastic modulus G'3 of the surface layer 3 satisfy relationships of G'2 ≤ G'1 and G'3 ≤ G'2. Further, for example, as illustrated in FIG. 2, in cases where the resin layers consist of two layers which are the base layer 1 and the surface layer 3, the elastic modulus G'1 of the base layer 1 and the elastic modulus G'3 of the surface layer 3 satisfy a relationship of G'3 ≤ G'1.

In the present invention, it is also preferred that all pairs of adjacent two layers of the plural resin layers satisfy a relationship of G'o < G'i between the elastic modulus G'o of a layer positioned on the outer circumferential side and the elastic modulus G'i of a layer positioned on the inner circumferential side. That is, in the present invention, it is preferred that the elastic moduli of the plural resin layers progressively decrease from the innermost base layer 1 toward the outermost surface layer 3. By defining the elastic moduli in this manner, the generation of a C-set can be inhibited more certainly, so that the occurrence of an image defect can be effectively suppressed.

In the present invention, the specific elastic modulus value of each of the plural resin layers is not particularly restricted; however, for example, the elastic modulus of the base layer 1 is preferably 1 to 100 MPa, more preferably 10 to 30 MPa. Further, the elastic modulus of the intermediate layer 2 is preferably 1 to 50 MPa, more preferably 10 to 30 MPa. Moreover, the elastic modulus of the surface layer 3 is preferably 1 to 30 MPa, more preferably 1 to 15 MPa.

In the present invention, the expected effects thereof can be attained as long as the plural resin layers arranged on the outer circumference of the shaft 4 satisfy the above-described conditions relating to mechanical properties. In the present invention, the materials, structures and the like of the roller other than the plural resin layers are not particularly restricted and may be appropriately selected as desired in accordance with a conventional method. For example, in the present invention, an adhesive layer may be arranged between layers as appropriate for the purpose of ensuring adhesion between the layers.

The shaft 4 is not particularly restricted as long as it has good electrical conductivity and, as the shaft 4, for example, a metal shaft, such as a solid core metal and a hollow metal cylindrical body made of iron, stainless steel, aluminum or the like, or a plastic shaft such as one having good electrical conductivity can be employed.

The base layer 1 arranged on the outer circumference of the shaft 4 can be formed from a foam, specific examples of which include elastomers, such as ether-based and ester-based polyurethanes, silicone rubbers, ethylene-propylene-diene rubbers (EPDM), acrylonitrile-butadiene rubbers (NBR), natural rubbers, styrene-butadiene rubbers (SBR), butadiene rubbers, isoprene rubbers, polynorbornene rubbers, butyl rubbers, chloroprene rubbers, acrylic rubbers, epichlorohydrin rubbers (ECO), ethylene-vinyl acetate copolymers (EVA), and mixtures thereof. As a material constituting the base layer 1, among these elastomers, it is preferred to use a polyurethane.

The foam constituting the base layer 1 can be formed by, for example, chemically foaming any of the above-described elastomers using a foaming agent, or mechanically incorporating air into any of the above-described elastomers to perform foaming as in the case of a polyurethane foam. The expansion ratio of the foam constituting the base layer 1 is preferably in a range of 1.5 to 50 times, and the density of the foam is preferably in a range of 0.05 to 0.9 g/cm³.

Further, since compression set performance is improved when air bubbles of the foam constituting the base layer 1 are closed cells, it is suitable that the air bubbles in the foam be closed cells. In order to allow the air bubbles of the foam to be closed cells, a method of foaming the raw material(s) of any of the above-described elastomers by mechanical stirring to obtain a foam is suitably employed.

In the base layer 1, a conductive agent, such as an electron conductive agent or an ion conductive agent, may be incorporated to adjust the electrical conductivity. Examples of the electron conductive agent include conductive carbons, such as Ketjen black and acetylene black; carbon blacks for rubbers, such as SAF, ISAF, HAF, FEF, GPF, SRF, FT and MT; coloring carbon blacks subjected to an oxidation treatment or the like; pyrolytic carbon blacks; natural graphites; artificial graphites; metal oxides, such as antimony-doped tin oxide, ITO, tin oxide, titanium oxide and zinc oxide; metals, such as nickel, copper, silver and germanium; conductive polymers, such as polyaniline, polypyrrole and polyacetylene; and conductive whiskers, such as carbon whiskers, graphite whiskers, titanium carbide whiskers, conductive potassium titanate whiskers, conductive barium titanate whiskers, conductive titanium oxide whiskers and conductive zinc oxide whiskers.

Further, examples of the ion conductive agent include ammonium salts, such as perchlorates, chlorates, hydrochlorides, bromates, iodates, fluoroborates, sulfates, ethylsulfates, carboxylates and sulfonates of tetraethylammonium, tetrabutylammonium, dodecyltrimethylammonium, hexadecyltrimethylammonium, benzyltrimethylammonium, modified fatty acid dimethylethylammonium and the like; and perchlorates, chlorates, hydrochlorides, bromates, iodates, fluoroborates, sulfates, trifluoromethylsulfates and sulfonates of alkali metals and alkaline earth metals, such as lithium, sodium, potassium, calcium and magnesium. The above-described conductive agents may be used individually or in combination of two or more thereof, and an electron conductive agent and an ion conductive agent may be used in combination as well.

The amount of the electron conductive agent(s) to be incorporated is preferably in a range of 1 to 50 parts by mass, more preferably in a range of 5 to 40 parts by mass, with respect to 100 parts by mass of the resin component constituting the base layer. Further, the amount of the ion conductive agent(s) to be incorporated is preferably 0.01 to 10 parts by mass, more preferably 0.05 to 5 parts by mass, with respect to 100 parts by mass of the resin component constituting the base layer. By incorporating the conductive agent(s), the resistance of the base layer 1 is adjusted to be preferably 10³ to 10¹⁰ Ω·cm, more preferably 10⁴ to 10⁸ Ω·cm. When the resistance of the base layer 1 is less than 10³ Ω·cm, electric charge may leak to a photosensitive drum and the like, and the roller itself may be destructed due to voltage, whereas when the resistance of the base layer 1 exceeds 10¹⁰ Ω·cm, fogging is likely to occur.

In the base layer 1, in order to make the elastomer into a rubber-like substance, a crosslinking agent such as an organic peroxide and/or a vulcanizing agent such as sulfur may be incorporated as required and, for example, a vulcanization aid, a vulcanization accelerator, a vulcanization accelerator aid and/or a vulcanization retardant may also be incorporated. Further, in the base layer 1, a variety of additives for rubbers, such as a filler, a peptizing agent, a foaming agent, a plasticizer, a softening agent, a tackifier, an antiblocking agent, a separating agent, a mold release agent, a bulking agent and a colorant, may be incorporated as well.

The thickness of the base layer 1 is not particularly restricted, and it may be, for example, 1.0 to 5.0 mm, preferably 1.0 to 3.0 mm.

On the outer circumference of the base layer 1, the surface layer 3 is arranged directly or via the intermediate layer 2. In the present invention, the surface layer 3 preferably has a lower elastic modulus than the base layer 1; therefore, as a resin component constituting the surface layer 3, it is suitable to use a low-Tg material such as urethane which has excellent impact resilience and is flexible in the use environment and, for example, a polyurethane resin that contains a polyol component having a number-average molecular weight (Mn), which is measured in terms of polystyrene by gel permeation chromatography, of 1,000 to 5,000 is preferably used as a main component. Specifically, for example, a urethane resin obtained by crosslinking a lactone-modified polyol with a polyisocyanate can be suitably used. The lactone-modified polyol can be produced by modifying a terminal of a polyol with a lactone such as *ε*-caprolactone, and a commercially available one may be used as well. From the standpoint of attaining both satisfactory compression set performance and satisfactory resistance to toner fusion when applied to the conductive roller, the lactone-modified polyol has a number-average molecular weight (Mn), which is measured in terms of polystyrene by gel permeation chromatography, of preferably 1,000 to 5,000, more preferably 1,000 to 3,000. Further, the molecular weight distribution (Mw/Mn), which is represented by the ratio between the weight-average molecular weight (Mw) and the number-average molecular weight (Mn) that are measured in terms of polystyrene by gel permeation chromatography, is preferably 2.5 or less, more preferably 2.0 or less.

Examples of the polyol modified with a lactone include polyether polyols obtained by addition polymerization of an alkylene oxide, such as ethylene oxide or propylene oxide, to glycerin or the like, polytetramethylene glycols, glycerol, ethylene glycol, propylene glycol, butanediol, pentanediol, hexanediol, octanediol, polybutadiene polyols, polyisoprene polyols, and polyester polyols.

Examples of the polyisocyanate used for crosslinking the lactone-modified polyol include isophorone diisocyanate (IPDI), tolylene diisocyanate (TDI), diphenylmethane diisocyanate (MDI), crude diphenylmethane diisocyanate (crude MDI), hydrogenated diphenylmethane diisocyanate, hydrogenated tolylene diisocyanate, hexamethylene diisocyanate (HDI), and isocyanurate-modified hexamethylene diisocyanate.

In the surface layer 3, a catalyst for accelerating the crosslinking reaction between the lactone-modified polyol and the polyisocyanate can be further incorporated. Examples of the catalyst include organic tin compounds, such as dibutyl tin dilaurate, dibutyl tin diacetate, dibutyl tin thiocarboxylate, dibutyl tin dimaleate, dioctyl tin thiocarboxylate, and tin octanoate; organic lead compounds, such as lead octanoate; monoamines, such as triethylamine and dimethylcyclohexylamine; diamines, such as tetramethylethylenediamine, tetramethylpropanediamine, and tetramethylhexanediamine; triamines, such as pentamethyldiethylene triamine, pentamethyldipropylene triamine, and tetramethylguanidine; cyclic amines, such as triethylenediamine, dimethylpiperazine, methylethylpiperazine, methylmorpholine, dimethylaminoethylmorpholine, and dimethylimidazole; alcohol amines, such as dimethylaminoethanol, dimethylaminoethoxyethanol, trimethylaminoethylethanolamine, methylhydroxyethylpiperazine, and hydroxyethyl morpholine; and ether amines, such as bis(dimethylaminoethyl)ether and ethylene glycol bis(dimethyl)aminopropyl ether. Among these catalysts, organic tin compounds are preferred. These catalysts may be used individually, or two or more thereof may be used in combination. The amount of the catalyst(s) to be used is preferably in a range of 0.001 to 2.0 parts by mass with respect to 100 parts by mass of the polyol.

Moreover, in the surface layer 3, a conductive agent may be incorporated to adjust the electrical conductivity. As the conductive agent, the same ones as those exemplified above for the base layer 1 can be used.

The amount of the conductive agent to be incorporated into the surface layer 3 is, in the case of an ion conductive agent, preferably 20 parts by mass or less, more preferably in a range of 0.01 to 20 parts by mass, still more preferably in a range of 1 to 10 parts by mass, with respect to 100 parts by mass of the resin component. Meanwhile, when the conductive agent is an electron conductive agent, the amount thereof to be incorporated is preferably in a range of 1 to 70 parts by mass, more preferably in a range of 5 to 50 parts by mass, with respect to 100 parts by mass of the resin component. By adding the conductive agent, the volume resistance of the surface layer 3 is adjusted to be in a range of preferably 10³ to 10¹⁰ Ω·cm, more preferably 10⁴ to 10⁸ Ω·cm.

The thickness of the surface layer 3 is not particularly restricted; however, it is preferably 30 µm or less, more preferably in a range of 1 to 15 µm. When the thickness of the surface layer 3 is greater than 30 µm, the surface layer 3 becomes hard and the flexibility may be deteriorated and, due to a reduction in durability, cracks may be generated by use and a toner may be thereby damaged to induce adhesion of the toner to a photosensitive drum and a layer forming blade, which may cause an image defect.

Between the base layer 1 and the surface layer 3, the intermediate layer 2 may be arranged for the purposes of, for example, adjusting the electrical conductivity and reducing damages to a toner. The intermediate layer 2 may be arranged singly, or two or more thereof may be arranged as well. When two or more intermediate layers 2 are arranged, in order to attain the expected effects of the present invention, it is preferred that the elastic modulus of the intermediate layer positioned on the inner circumferential side and that of the intermediate layer positioned on the outer circumferential side satisfy the condition of the present invention.

The intermediate layer(s) 2 can be suitably formed by using any one or more of aqueous resins selected from rubber-based, urethane-based and acrylic resins. As the rubber-based resins, latexes such as natural rubbers (NR), chloroprene rubbers (CR), nitrile rubbers (NBR) and styrene-butadiene rubbers (SBR) can be suitably used and, as the urethane-based resins, for example, ether-based or ester-based emulsions and dispersions can be suitably used. As the acrylic resins, emulsions of acryl, acrylic styrene or the like can be suitably used.

The total thickness of the intermediate layer(s) 2 can be, for example, 10 to 500 µm, preferably 30 to 350 µm.

A method of forming the surface layer 3 and the intermediate layer 2 that is arranged as required is not particularly restricted, and a method in which a coating composition containing the components constituting each layer is prepared and subsequently coated on the surface of the base layer 1 or the intermediate layer 2 by a known coating method such as a dipping method, a spraying method or a roll coating method, after which the thus coated composition is heat-cured at 100 to 120°C for 20 to 120 minutes, is preferably employed.

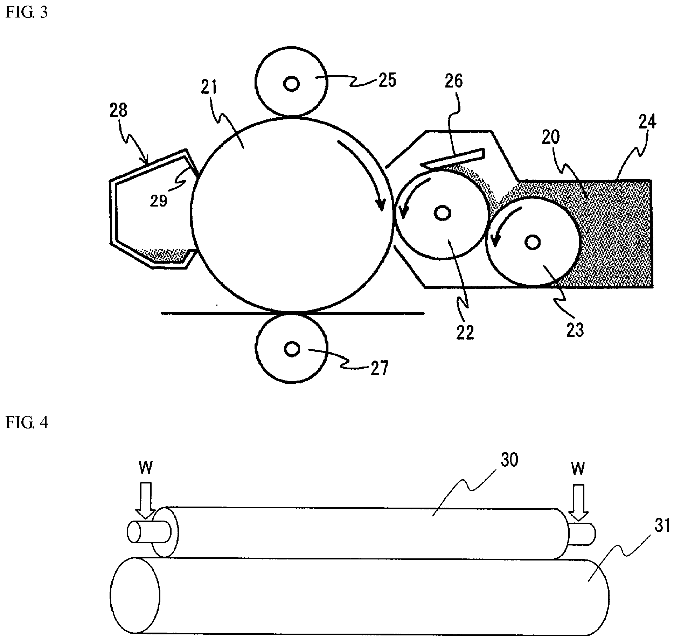

FIG. 3 is a partial cross-sectional view illustrating one example of the image forming apparatus of the present invention. The roller of the present invention can be used in such an image forming apparatus as illustrated in FIG. 3 and is particularly useful as a charging roller. By using the roller of the present invention as a charging roller in such an image forming apparatus as illustrated in FIG. 3, especially when the apparatus is left to stand for a long period under a high-temperature and high-humidity environment, the generation of a C-set at a portion where the roller is in press-contact with other member such as a photosensitive drum can be inhibited, so that an effect of suppressing the occurrence of an image defect can be attained.

The illustrated image forming apparatus of the present invention includes: an image forming body 21 which retains an electrostatic latent image, such as a photosensitive drum; a developing roller 22 which is in contact with the image forming body 21 and allows a toner 20 supported on its surface to adhere to the image forming body 21 so as to convert the electrostatic latent image into a visible image; and a toner supply roller 23 which supplies the toner 20 to the developing roller 22, and an image is formed by a series of processes of transferring the toner 20 from a toner container 24 to the image forming body 21 via the toner supply roller 23 and the developing roller 22.

In the illustrated image forming apparatus, after the image forming body 21 is charged to a certain electric potential by a charging roller 25, an electrostatic latent image is formed on the image forming body 21 by an exposure device (not illustrated). Next, as the toner supply roller 23, the developing roller 22 and the image forming body 21 each rotate in the direction of the respective arrows shown in the drawing, the toner 20 on the toner supply roller 23 is delivered to the image forming body 21 via the developing roller 22. The toner 20 on the developing roller 22 is made into a uniform thin layer by a layer forming blade 26 and, as the developing roller 22 and the image forming body 21 rotate in contact with each other, the toner 20 adheres to the electrostatic latent image on the image forming body 21 from the developing roller 22, whereby the latent image is visualized. The toner 20 adhering to the latent image is transferred onto a recording medium such as a piece of paper by a transfer member such as a transfer roller 27, and the toner 20 remaining on the image forming body 21 after the transfer is removed by a cleaning blade 29 of a cleaning unit 28.

### DESCRIPTION OF SYMBOLS

- 1:: base layer
- 2:: intermediate layer
- 3:: surface layer
- 4:: shaft
- 20:: toner
- 21:: image forming body
- 22:: developing roller
- 23:: toner supply roller
- 24:: toner container
- 25:: charging roller
- 26:: layer forming blade
- 27:: transfer roller
- 28:: cleaning unit
- 29:: cleaning blade
- 30:: test roller
- 31:: photosensitive drum

## Claims

1. A conductive roller in which plural resin layers are arranged on the outer circumference of a shaft (4), wherein the resin layers comprise at least a base layer (1) and a surface layer (3) from the inner circumferential side, the plural resin layers all have a loss tangent (tan δ) of 0.2 or less at a temperature of 40°C, and, among the plural resin layers, at least a pair of two adjacent layers satisfy a relationship of G'o ≤ G'i between the elastic modulus G'o of a layer positioned on the outer circumferential side and the elastic modulus G'i of a layer positioned on the inner circumferential side.

2. The conductive roller according to claim 1, wherein all pairs of adjacent two layers of the plural resin layers satisfy a relationship of G'o ≤ G'i between the elastic modulus G'o of a layer positioned on the outer circumferential side and the elastic modulus G'i of a layer positioned on the inner circumferential side.

3. The conductive roller according to claim 1 or 2, wherein the resin layers comprise at least the base layer, an intermediate layer (2) and the surface layer from the inner circumferential side.

4. The conductive roller according to any one of claims 1 to 3, wherein all pairs of adjacent two layers of the plural resin layers satisfy a relationship of G'o < G'i between the elastic modulus G'o of a layer positioned on the outer circumferential side and the elastic modulus G'i of a layer positioned on the inner circumferential side.

5. The conductive roller according to any one of claims 1 to 4, wherein the surface layer comprises, as a main component, a polyurethane resin that contains a polyol component having a number-average molecular weight (Mn) of 1,000 to 5,000 in terms of polystyrene.

6. The conductive roller according to any one of claims 1 to 5, wherein the surface layer has an elastic modulus of 1 to 30 MPa.

7. The conductive roller according to any one of claims 1 to 6, wherein the intermediate layer has an elastic modulus of 1 to 50 MPa.

8. The conductive roller according to any one of claims 1 to 7, wherein the base layer has an elastic modulus of 1 to 100 MPa.

## Patentansprüche

1. Leitfähige Walze, bei der mehrere Harzlagen auf dem Außenumfang einer Welle (4) angeordnet sind,
wobei die Harzlagen wenigstens eine Basislage (1) und eine Oberflächenlage (3) von der Innenumfangsseite umfassen, wobei die mehreren Harzlagen alle eine Verlustziffer (tan δ) von 0,2 oder weniger bei einer Temperatur von 40°C aufweisen und, unter den mehreren Harzlagen, wenigstens ein Paar von zwei benachbarten Lagen eine Beziehung von G'o ≤ G'i zwischen dem Elastizitätsmodul G'o einer Lage, die auf der Außenumfangsseite angeordnet ist, und dem Elastizitätsmodul G'i einer Lage, die auf der Innenumfangsseite angeordnet ist, erfüllt.

2. Leitfähige Walze nach Anspruch 1, wobei alle Paare von zwei benachbarten Lagen der mehreren Harzlagen eine Beziehung von G'o ≤ G'i zwischen dem Elastizitätsmodul G'o einer Lage, die auf der Außenumfangsseite angeordnet ist, und dem Elastizitätsmodul G'i einer Lage, die auf der Innenumfangsseite angeordnet ist, erfüllen.

3. Leitfähige Walze nach Anspruch 1 oder 2, wobei die Harzlagen wenigstens die Basislage, eine Zwischenlage (2) und die Oberflächenlage von der Innenumfangsseite umfassen.

4. Leitfähige Walze nach einem der Ansprüche 1 bis 3, wobei alle Paare von zwei benachbarten Lagen der mehreren Harzlagen eine Beziehung von G'o < G'i zwischen dem Elastizitätsmodul G'o einer Lage, die auf der Außenumfangsseite angeordnet ist, und dem Elastizitätsmodul G'i einer Lage, die auf der Innenumfangsseite angeordnet ist, erfüllen.

5. Leitfähige Walze nach einem der Ansprüche 1 bis 4, wobei die Oberflächenlage, als einen Hauptbestandteil, ein Polyurethanharz umfasst, das einen Polyol-Bestandteil enthält, der ein zahlengemitteltes Molekulargewicht (Mn) von 1000 bis 5000 in Bezug auf Polystyrol aufweist.

6. Leitfähige Walze nach einem der Ansprüche 1 bis 5, wobei die Oberflächenlage einen Elastizitätsmodul von 1 bis 30 MPa aufweist.

7. Leitfähige Walze nach einem der Ansprüche 1 bis 6, wobei die Zwischenlage einen Elastizitätsmodul von 1 bis 50 MPa aufweist.

8. Leitfähige Walze nach einem der Ansprüche 1 bis 7, wobei die Basislage einen Elastizitätsmodul von 1 bis 100 MPa aufweist.

## Revendications

1. Rouleau conducteur dans lequel plusieurs couches de résine sont disposées sur la circonférence extérieure d'un arbre (4),
dans lequel les couches de résine comprennent au moins une couche de base (1) et une couche de surface (3) à partir du côté circonférentiel intérieur, les plusieurs couches de résine ayant toutes une tangente de perte (tan δ) de 0,2 ou moins à une température de 40°C, et parmi les plusieurs couches de résine, au moins une paire de deux couches adjacentes satisfont à une relation G'o ≤ G'i entre le module d'élasticité G'o d'une couche positionnée sur le côté circonférentiel extérieur et le module d'élasticité G'i d'une couche positionnée sur le côté circonférentiel intérieur.

2. Rouleau conducteur selon la revendication 1, dans lequel toutes les paires de deux couches adjacentes des plusieurs couches de résine satisfont à une relation G'o ≤ G'i entre le module d'élasticité G'o d'une couche positionnée sur le côté circonférentiel extérieur et le module d'élasticité G'i d'une couche positionnée sur le côté circonférentiel intérieur.

3. Rouleau conducteur selon les revendications 1 ou 2, dans lequel les couches de résine comprennent au moins la couche de base, une couche intermédiaire (2) et la couche de surface à partir du côté circonférentiel intérieur.

4. Rouleau conducteur selon l'une quelconque des revendications 1 à 3, dans lequel toutes les paires de deux couches adjacentes des plusieurs couches de résine satisfont à une relation G'o < G'i entre le module d'élasticité G'o d'une couche positionnée sur le côté circonférentiel extérieur et le module d'élasticité G'i d'une couche positionnée sur le côté circonférentiel intérieur.

5. Rouleau conducteur selon l'une quelconque des revendications 1 à 4, dans lequel la couche de surface comprend, en tant que constituant principal, une résine de polyuréthane qui contient un constituant de polyol ayant une masse moléculaire moyenne en nombre (Mn) de 1000 à 5000 en termes de polystyrène.

6. Rouleau conducteur selon l'une quelconque des revendications 1 à 5, dans lequel la couche de surface a un module d'élasticité de 1 à 30 MPa.

7. Rouleau conducteur selon l'une quelconque des revendications 1 à 6, dans lequel la couche intermédiaire a un module d'élasticité de 1 à 50 MPa.

8. Rouleau conducteur selon l'une quelconque des revendications 1 à 7, dans lequel la couche de base a un module d'élasticité de 1 à 100 MPa.
